(19) Europäisches Patentamt

European Patent Office

Office européen des brevets

(11) **EP 1 759 895 B1**

(12) **FASCICULE DE BREVET EUROPEEN**

(45) Date de publication et mention
de la délivrance du brevet:
**19.08.2009 Bulletin 2009/34**

(51) Int Cl.:
***B60G 17/016*** (2006.01) ***B60G 21/055*** (2006.01)

(21) Numéro de dépôt: **05300718.3**

(22) Date de dépôt: **05.09.2005**

(54) **Système de suspension d'un véhicule avec une barre stabilisatrice pouvant être désaccouplée**

Aufhängungssystem für ein Fahrzeug mit einem entkuppelbarem Stabilisatorstab

Suspension system for a vehicle having a decouplable stabiliser bar

(84) Etats contractants désignés:
**AT BE BG CH CY CZ DE DK EE ES FI FR GB GR HU IE IS IT LI LT LU LV MC NL PL PT RO SE SI SK TR**

(43) Date de publication de la demande:
**07.03.2007 Bulletin 2007/10**

(73) Titulaire: **Delphi Technologies, Inc.**
**Troy, MI 48007 (US)**

(72) Inventeurs:
• **Barth, Laurent**
**60200 Compiegne (FR)**

• **Delayre, Xavier**
**92400 Courbevoie (FR)**

(74) Mandataire: **Denton, Michael John**
**Delphi France SAS**
**64, avenue de la Plaine de France**
**93290 Tremblay-en-France (FR)**

(56) Documents cités:
**US-A1- 2002 180 167 US-B1- 6 425 585**

**Description**

La présente invention concerne les barres anti-roulis pour véhicule. Plus particulièrement, la présente invention concerne un mécanisme de couplage mécanique pour barre anti-roulis.

Lorsqu'un véhicule tourne, l'accélération latérale produit un moment, orienté selon l'axe longitudinal du véhicule, entraînant un changement de l'assiette de la caisse du véhicule : les jambes de force des roues placées à l'intérieur du virage subissent une charge différente de celle que subissent les jambes de force des roues placées à l'extérieur du virage. Par rapport à la caisse, les supports de roue se déplacent d'une quantité différente le long de l'axe (quasiment vertical) des jambes de force. Par rapport à l'axe passant par les roues d'un train de roues, la caisse est inclinée d'un angle dit de roulis.

Afin de réduire le roulis d'un véhicule, il est connu de munir le train de roues avant et/ou le train de roues arrière d'un dispositif anti-roulis passif. Ce dernier consiste en une barre de torsion, globalement en forme de U, comportant une portion centrale rectiligne orientée selon l'axe des roues du train de roues, et deux bras situés à chacune des extrémités de ladite portion centrale et s'étendant globalement perpendiculairement à cette dernière. La portion centrale est liée à la caisse par une liaison de type pivot permettant une rotation de la barre autour de l'axe de la portion centrale. Les extrémités libres des bras sont respectivement reliées à chacun des supports de roue (par exemple, sur le porte moyeu ou la portion inférieure de la jambe de force de chacune des roues).

Dans un virage, la différence de quantité de déplacement vertical des supports de roue déforme la barre de torsion de manière à ce qu'un angle de torsion apparaisse entre les bras de celle-ci. Un couple de rappel élastique est alors créé, s'opposant au mouvement des supports de roue et réduisant le mouvement de roulis de la caisse. Aucune énergie n'est apportée au dispositif anti-roulis qui est alors qualifié de passif.

La barre de torsion se déformant élastiquement, le couple de rappel élastique est proportionnel à l'angle de torsion précité. En d'autres termes, la raideur du dispositif anti-roulis passif, correspondant au rapport entre le couple de rappel et l'angle de torsion, est sensiblement constante. Une raideur constante ne correspond pas nécessairement à un comportement de roulis optimal du véhicule.

Des dispositifs anti-roulis actifs sont connus. Par exemple, le document US 6 425 585 divulgue un dispositif anti-roulis actif électromécanique. Dans ce dispositif, la barre anti-roulis en forme de U est constituée de deux demi-barres reliées l'une à l'autre au niveau de la portion centrale de la barre anti-roulis au moyen d'un mécanisme de couplage. Ce type de dispositif est qualifié d'actif car le mécanisme de couplage est apte à générer et appliquer un contre-couple entre les deux demi-barres. Ainsi, le couple appliqué aux deux demi-barres n'est pas nécessairement proportionnel à l'angle de rotation relative entre les deux demi-barres, correspondant à l'angle de torsion du dispositif anti-roulis. Comparé à un dispositif anti-roulis passif, un dispositif anti-roulis actif présente donc une raideur variable.

Pour générer le contre-couple, il est nécessaire d'apporter de l'énergie au mécanisme de couplage, qui doit comprendre un actionneur, par exemple un moteur électrique, commandé par exemple par un dispositif électronique. Ces éléments constituent des points sensibles d'un dispositif anti-roulis actif, qui peuvent nécessiter des opérations de maintenance.

US 6 550 788 divulgue un mécanisme de couplage entre deux demi-barres comprenant un moteur électrique permettant de faire varier la raideur de torsion de la barre anti-roulis.

L'invention a pour but de fournir un dispositif anti-roulis et un mécanisme de couplage, ne présentant pas au moins certains des inconvénients précités de l'art antérieur.

Pour cela, l'invention fournit un mécanisme de couplage pour barre antiroulis de véhicule, destiné à réaliser un couplage entre une première et une deuxième demi-barre en présentant une raideur de torsion, comprenant un corps, caractérisé par le fait qu'il comprend au moins un mécanisme de transmission incluant un arbre d'entrée monté à rotation par rapport audit corps et destiné à être lié à ladite première demi-barre, un ressort de torsion présentant une première portion montée à rotation par rapport audit corps, des moyens de transmission accouplant l'arbre d'entrée à ladite première portion du ressort de torsion de manière à transmettre une rotation dudit arbre d'entrée à ladite première portion, lesdits moyens de transmission présentant un rapport de transmission variable en fonction de l'angle de rotation dudit arbre d'entrée par rapport audit corps, ledit mécanisme de couplage comprenant des moyens de liaison destinés à lier une deuxième portion du ressort de torsion à ladite deuxième demi-barre de manière qu'une rotation relative desdites première et deuxième demi-barres entraîne une torsion dudit ressort de torsion.

Ce mécanisme de couplage peut être entièrement mécanique. En d'autres termes, il n'est pas nécessaire qu'il comprenne un moteur électrique ou un autre type d'actionneur, ni un dispositif de contrôle électronique, ni de lui apporter de l'énergie, ce qui réduit ou annule la consommation énergétique et la nécessité d'effectuer des opérations de maintenance. Ce mécanisme de couplage permet de conférer une raideur variable à un dispositif anti-roulis. Par exemple, le mécanisme de couplage peut être configuré pour que, lorsque l'angle de torsion du dispositif anti-roulis est nul ou faible, la raideur soit faible, de sorte qu'un choc subit par une des roues du véhicule n'est que peu transmis à la roue opposée, ce qui améliore le confort du véhicule ; et pour que lorsque l'angle de torsion du dispositif anti-roulis est plus important, la raideur soit plus importante, de sorte que le roulis soit bien compensé, ce qui améliore également le confort du véhicule. De plus, il est possible de concevoir les moyens de transmission pour que la relation entre le rapport de transmission et l'angle de rotation de l'arbre d'entrée par rapport au corps corresponde à une variation voulue de la raideur du dispositif anti-roulis de manière à obtenir un comportement voulu du véhicule.

Selon un mode de réalisation particulier, le rapport dudit angle de rotation de ladite première portion du ressort de torsion par rapport audit corps sur l'angle de rotation de l'arbre d'entrée par rapport audit corps est une fonction continue décroissante dudit angle de rotation de l'arbre d'entrée par rapport audit corps.

Grâce à ces caractéristiques, le mécanisme de couplage permet de conférer à un dispositif anti-roulis une raideur décroissante en fonction de l'angle de torsion. En d'autres termes, le couple de rappel augmente moins rapidement que l'angle de torsion.

Selon un mode de réalisation particulier, le rapport dudit angle de rotation de ladite première portion du ressort de torsion par rapport audit corps sur l'angle de rotation de l'arbre d'entrée par rapport audit corps est une fonction continue croissante dudit angle de rotation de l'arbre d'entrée par rapport audit corps.

Grâce à ces caractéristiques, le mécanisme de couplage permet de conférer à un dispositif anti-roulis une raideur croissante en fonction de l'angle de torsion.

Selon un mode de réalisation, lesdits moyens de transmission comprennent un premier et un deuxième pignon en ellipses ou portion d'ellipse de formes correspondantes pour coopérer l'un avec l'autre lors d'une rotation autour de leurs centres respectifs, ledit premier pignon étant couplé à ladite première portion du ressort de torsion de manière que la rotation dudit premier pignon est proportionnelle audit angle de rotation de ladite première portion par rapport audit corps, ledit deuxième pignon étant couplé audit arbre d'entrée de manière que la rotation dudit deuxième pignon est proportionnelle audit angle de rotation de l'arbre d'entrée par rapport audit corps.

Avantageusement, dans un état neutre dudit mécanisme de couplage correspondant à une valeur nulle desdits angles de rotation par rapport audit corps, lesdits premier et deuxième pignons sont agencés de manière à coopérer au niveau d'un petit axe dudit premier pignon et d'un grand axe dudit deuxième pignon.

Une configuration inverse est également envisageable.

Selon un mode de réalisation, lesdits moyens de transmission comprennent un premier et un deuxième pignon présentant chacun une portion en spirale de formes complémentaires pour coopérer l'un avec l'autre lors d'une rotation autour de leurs centres respectifs, ledit premier pignon étant couplé à ladite première portion du ressort de torsion de manière que la rotation dudit premier pignon est proportionnelle audit angle de rotation de ladite première portion par rapport audit corps, ledit deuxième pignon étant couplé audit arbre d'entrée de manière que la rotation dudit deuxième pignon est proportionnelle audit angle de rotation de l'arbre d'entrée par rapport audit corps.

Avantageusement, dans un état neutre dudit mécanisme de couplage correspondant à une valeur nulle dudit angle de torsion et dudit angle de rotation, lesdits premier et deuxième pignons sont agencés de manière à coopérer au niveau d'un rayon dudit premier pignon et d'un rayon dudit deuxième pignon de longueur supérieure à la longueur dudit rayon du premier pignon.

Une configuration inverse est également envisageable.

De préférence, lesdits moyens de liaison comprennent un mécanisme de transmission supplémentaire incluant un arbre d'entrée supplémentaire monté à rotation par rapport audit corps et destiné à être lié à ladite deuxième demi-barre, lesdites première et deuxième portions dudit ressort de torsion montées à rotation par rapport audit corps, des moyens de transmission supplémentaires accouplant l'arbre d'entrée supplémentaire à ladite deuxième portion du ressort de torsion de manière à transmettre une rotation dudit arbre d'entrée supplémentaire à ladite deuxième portion, lesdits moyens de transmission supplémentaires présentant un rapport de transmission variable en fonction de l'angle de rotation dudit arbre d'entrée supplémentaire par rapport audit corps.

Dans un tel mécanisme, les efforts résultant de la torsion du ressort de torsion, qui doivent être supportés par les mécanismes de transmission, peuvent être répartis entre les deux mécanismes de transmission. Ainsi, les mécanismes de transmission peuvent être conçus pour ne devoir supporter que des efforts réduits.

Avantageusement, ledit mécanisme de transmission comprend une butée agencée de manière que lors de ladite rotation relative desdites demi-barres dans un premier sens à partir d'un état neutre dudit mécanisme de couplage, correspondant à une valeur nulle desdits angles de rotation par rapport audit corps, l'actionnement dudit mécanisme de transmission est bloqué par ladite butée, et ledit mécanisme de transmission supplémentaire comprend une butée agencée de manière que lors de ladite rotation relative desdites demi-barres dans un second sens à partir dudit état neutre, l'actionnement dudit mécanisme de transmission supplémentaire est bloqué par ladite butée.

Ainsi, les mécanismes de transmission peuvent être conçus pour ne devoir être actionné que lors d'une rotation dans un sens à partir de l'état neutre. Par exemple dans le cas d'un mécanisme de transmission comprenant deux pignons en forme de spirale, les spirales peuvent être interrompues à l'endroit où les deux pignons coopèrent à l'état neutre.

De préférence, lesdits moyens de liaison comprennent une portion dudit corps, ladite deuxième portion dudit ressort de torsion étant fixée en rotation à ladite portion du corps, ladite portion du corps étant destinée à être fixée en rotation à ladite deuxième demi-barre.

Ainsi, la liaison entre la deuxième portion du ressort de torsion et la deuxième demi-barre peut être réalisée de manière très simple, peu coûteuse et peu encombrante.

Avantageusement, ledit ressort de torsion comprend une tige de torsion. Une tige de torsion est un ressort de torsion particulièrement peu encombrant.

Selon un mode de réalisation particulier, ledit mécanisme de transmission inclut une deuxième tige de torsion présentant une première portion d'extrémité montée à rotation par rapport audit corps, lesdits moyens de transmission accouplant ledit arbre d'entrée à ladite première portion de la deuxième tige de torsion, lesdits moyens de liaison étant aptes à lier une deuxième portion de la deuxième tige de torsion à ladite deuxième demi-barre de manière qu'une rotation relative desdites première et deuxième demi-barres entraîne une torsion de ladite deuxième tige de torsion.

Dans un tel mécanisme, les efforts résultant de la torsion des tiges de torsion, qui doivent être supportés par le mécanisme de transmission, sont répartis entre une partie du mécanisme de transmission qui accouple la première tige de torsion à l'arbre d'entrée et une partie du mécanisme de transmission qui accouple la deuxième tige de torsion à l'arbre d'entrée. Ainsi, chaque partie du mécanisme de transmission peut être conçue pour ne devoir supporter que des efforts réduits.

Selon un mode de réalisation particulier, le mécanisme de couplage comprend une autre tige de torsion présentant une première portion d'extrémité montée à rotation par rapport audit corps et couplée audit premier arbre d'entrée destiné à être lié à ladite première demi-barre de manière que l'angle de rotation de la première portion de ladite autre tige de torsion est proportionnel audit angle de rotation dudit premier arbre d'entrée par rapport audit corps, une deuxième portion de ladite autre tige de torsion étant couplée à un deuxième arbre d'entrée monté à rotation par rapport audit corps et destiné à être lié à ladite deuxième demi-barre de manière qu'une rotation relative desdites première et deuxième demi-barres entraîne une torsion de ladite autre tige de torsion.

De préférence, ladite tige de torsion s'étend de manière coaxiale avec un axe longitudinal desdites demi-barres.

Ces caractéristiques permettent de réduire l'encombrement du mécanisme de couplage.

Avantageusement, ladite ou chaque tige de torsion est un cylindre creux.

De préférence, ledit corps comprend un boîtier, ledit ressort de torsion et ledit au moins un mécanisme de transmission étant agencés dans ledit boîtier.

Selon un mode réalisation particulier, lesdits moyens de liaison comprennent des moyens de découplage aptes à découpler ladite deuxième portion du ressort de torsion de ladite deuxième demi-barre.

L'invention fournit également un dispositif antiroulis pour équiper un train de roues d'un véhicule automobile dans lequel chacune des roues dudit train de roues est couplée avec une mobilité verticale à une caisse dudit véhicule, ledit dispositif anti-roulis comportant une barre de torsion en forme de U ayant une portion centrale destinée à être montée solidairement à ladite caisse et parallèlement à un axe dudit train de roues, et des premier et deuxième bras latéraux dont les extrémités libres sont destinées à être respectivement couplées à des supports desdites roues ; ladite barre de torsion étant composée d'une première demi-barre et d'une deuxième demi-barre reliées l'une à l'autre au niveau de ladite portion centrale au moyen d'un mécanisme de couplage pour coupler lesdites première et deuxième demi-barres entre elles en présentant une raideur de torsion, caractérisé en ce que ledit mécanisme de couplage est un mécanisme selon l'invention définie ci-dessus.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :

- la figure 1 est une vue partielle schématique d'un véhicule équipé d'un dispositif anti-roulis comprenant un mécanisme de couplage selon un premier mode de réalisation de la présente invention ;
- la figure 2 est une vue en perspective du dispositif anti-roulis et du mécanisme de couplage de la figure 1 ;
- la figure 3 est une vue en coupe axiale du mécanisme de couplage de la figure 1 ;
- la figure 4 est une vue en coupe du mécanisme de couplage de la figure 3, selon la ligne IV-IV de la figure 3 ;
- la figure 5 est une vue en coupe du mécanisme de couplage de la figure 3, selon la ligne V-V de la figure 3 ;
- la figure 6 est une vue en coupe axiale d'un mécanisme de couplage selon un deuxième mode de réalisation de l'invention ;
- la figure 7 est une vue en coupe axiale d'un mécanisme de couplage selon un troisième mode de réalisation de l'invention ;
- la figure 8 est une vue en coupe du mécanisme de couplage de la figure 7, selon la ligne VIII-VIII de la figure 7 ;
- la figure 9 est une vue en coupe du mécanisme de couplage de la figure 7, selon la ligne IX-IX de la figure 7 ;
- la figure 10 est une vue en coupe axiale d'un mécanisme de couplage selon un quatrième mode de réalisation de l'invention ;
- la figure 11 est une vue en coupe du mécanisme de couplage de la figure 10, selon la ligne XI-XI de la figure 10 ;
- la figure 12 est une vue en coupe du mécanisme de couplage de la figure 10, selon la ligne XII-XII de la figure 10 ;
- la figure 13 est une vue en coupe du mécanisme de couplage de la figure 10, selon la ligne XIII-XIII de la figure 10 ;

- la figure 14 est une vue en coupe axiale d'un mécanisme de couplage selon un cinquième mode de réalisation de l'invention ;
- la figure 15 est une vue en coupe du mécanisme de couplage de la figure 14, selon la ligne XV-XV de la figure 14 ;
- la figure 16 est une vue en coupe du mécanisme de couplage de la figure 14, selon la ligne XVI-XVI de la figure 14 ;
- la figure 17 est un graphe qui illustre la relation entre l'angle de torsion et le couple de rappel, pour une barre anti-roulis classique et deux dispositifs anti-roulis, incluant le mécanisme de couplage des figures 3 et 7 ;
- la figure 18 est un graphe qui illustre la relation entre le rapport de transmission et l'angle de rotation relative des demi-barres, pour le mécanisme de couplage de la figure 3 ;
- la figure 19 est un graphe qui illustre la relation entre le rapport de transmission et l'angle de rotation relative des demi-barres, pour le mécanisme de couplage de la figure 7 ;
- la figure 20 est un graphe qui illustre la relation entre l'angle de rotation relative des demi-barres et l'angle de torsion de la tige de torsion, pour les mécanismes de couplages des figures 3 et 7.

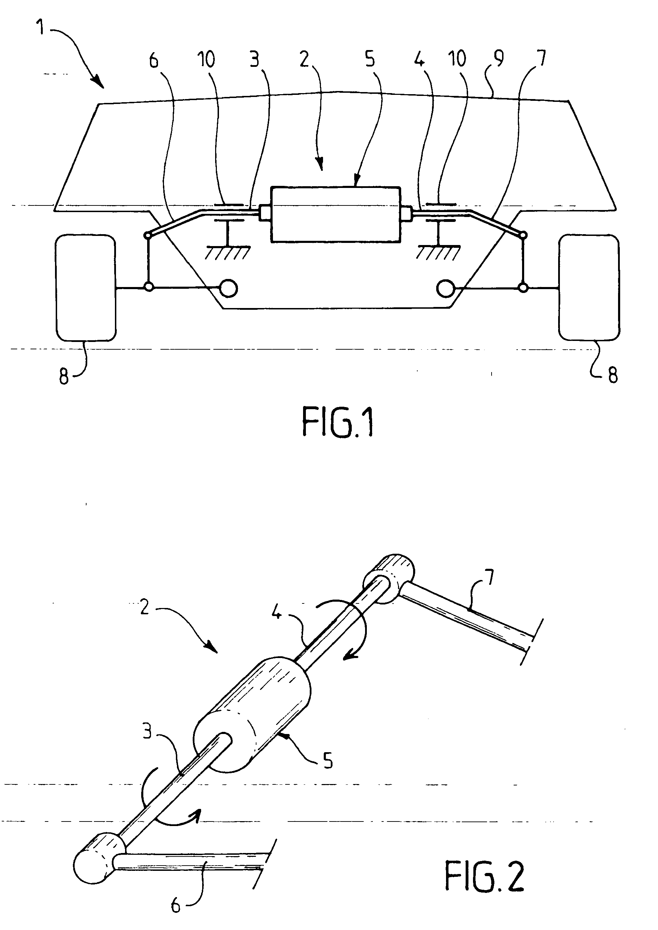

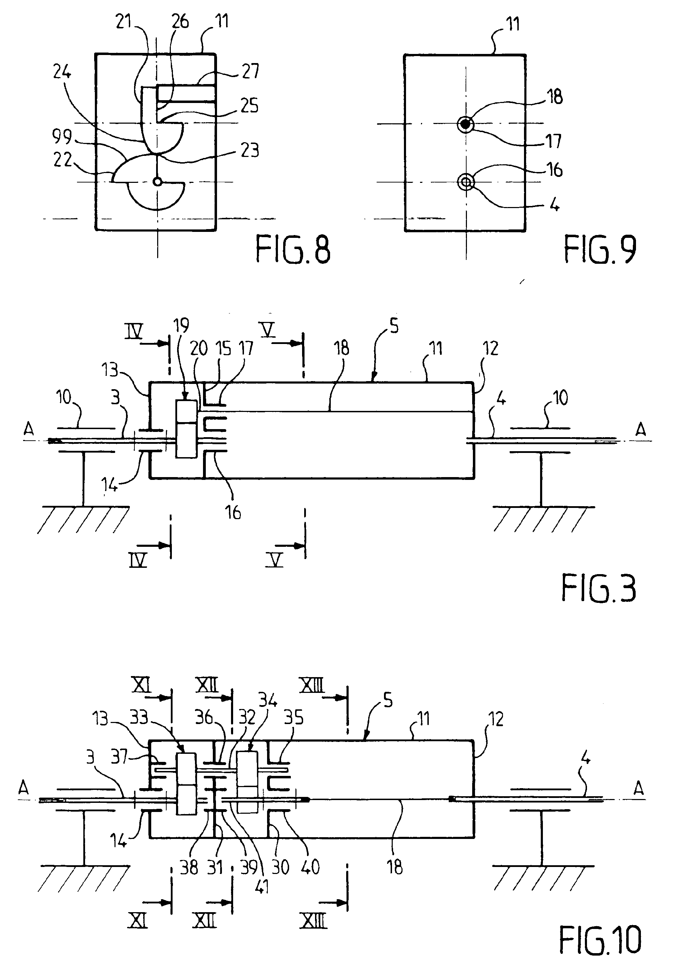

En référence aux figures 1 et 2, le véhicule 1 est équipé d'un dispositif anti-roulis 2. Le dispositif anti-roulis 2 comprend une portion centrale composée de deux demi-barres 3 et 4 alignées selon un axe A (figure 3) parallèle à l'axe du train de roues. Il peut s'agir du train de roues avant et/ou arrière. Les demi-barres 3 et 4 sont reliées par un mécanisme de couplage 5.

Le dispositif 2 comprend également deux bras latéraux 6 et 7 reliés aux extrémités des demi-barres 3 et 4 de manière à former une barre de torsion en forme de U. Les extrémités des bras latéraux 6 et 7 sont couplées à des supports des roues 8, par exemple aux jambes de forces des roues 8. Les demi-barres 3 et 4 sont couplées à la caisse 9 du véhicule 1 par l'intermédiaire de paliers de liaison en pivot 10.

Quand, dans un virage, la caisse 9 s'incline selon un angle de roulis α donné, le dispositif anti-roulis 2 est dans un état de torsion dans lequel les bras latéraux 6 et 7 forment un angle β qui dépend de l'angle α. Un couple de rappel Tc apparaît, qui tend à annuler l'angle β. On peut désigner par « raideur de torsion du dispositif anti-roulis 2 » le rapport Tc / β.

Le mécanisme de couplage 5 est représenté sur les figures 3 à 5. Il comprend un boîtier 11 cylindrique de section rectangulaire, dont l'axe est parallèle ou coaxial à l'axe A des demi-barres 3 et 4. La demi-barre 4 est fixée à une paroi d'extrémité 12 du boîtier 11. Au niveau de la paroi d'extrémité 13 opposée, le mécanisme de couplage 5 comprend un palier 14. La demi-barre 3 est liée à la paroi 13 par le palier 14, de manière à pénétrer partiellement dans le boîtier 11 et à pouvoir tourner par rapport au boîtier 11, selon l'axe A. Ainsi, une rotation relative des demi-barres 3 et 4 correspond à une rotation relative de la demi-barre 3 et du boîtier 11.

Dans le cadre de cette description, on considère que la raideur de torsion des demi-barres 3 et 4 est bien plus élevée que la raideur de torsion Kc du mécanisme de couplage 5, égale au rapport Kc = Tc / Ωc. Dans cette hypothèse, un angle β formé par les bras latéraux 6 et 7 correspond à une rotation relative des demi-barres 3 et 4, et donc à une rotation relative de la demi-barre 3 et du boîtier 11, selon un angle Ωc égal à β. La raideur de torsion du dispositif anti-roulis 2 est égale à la raideur de torsion Kc du mécanisme de couplage 5. En variante, si cette hypothèse n'est pas vérifiée, l'angle de rotation Ωc entre l'extrémité interne de la demi-barre 3 et le boîtier 11 est une portion de l'angle β. Dans ce cas, la raideur de torsion du dispositif anti-roulis 2 est une combinaison de la raideur de torsion Kc du mécanisme de couplage 5 et des raideurs de torsion des demi-barres 3 et 4.

Le mécanisme 5 comprend une paroi interne 15, agencée à l'intérieur du boîtier 11 parallèlement aux parois 12 et 13. La paroi 15 présente un premier palier 16, en regard du palier 14, et un deuxième palier 17, désaxée par rapport à l'axe A. Le palier 16 porte l'extrémité interne de la demi-barre 3. Le palier 17 porte une portion d'extrémité 20 d'une tige de torsion 18.

La tige de torsion 18 est fixée par une extrémité à la paroi 12. Elle s'étend parallèlement à l'axe A, à l'intérieur du boîtier 11, en passant par le palier 17, de sorte que son autre extrémité est située entre les parois 13 et 15.

Le mécanisme de couplage 5 comprend un mécanisme de transmission 19 à rapport variable, agencé entre les parois 13 et 15. Le mécanisme de transmission 19 accouple la demi-barre 3 à la portion d'extrémité 20 de la tige 18, de sorte que la rotation de la demi-barre 3 par rapport au boîtier 11 selon un angle Ωc correspond à une rotation de la portion 20 de la tige 18 par rapport au boîtier 11 selon un angle Ωm. Le rapport de transmission K du mécanisme 19 est défini par K = Ωm/ Ωc.

Comme l'extrémité de la tige 18 opposée à la portion 20 est fixée à la paroi 12, la rotation de la portion d'extrémité 20 de la tige 18 selon l'angle Ωm correspond à une torsion de la tige 18, faisant apparaître un couple de rappel élastique Tm. La tige 18 est une tige cylindrique de longueur 1g, de diamètre d, et dont le matériau, par exemple de l'acier, présente un module de glissement transversal G. Dans ce cas, la raideur de torsion Km de la tige 18 est donnée par :

$$Km = Tm / \Omega m = G \cdot \pi \cdot d^4 / 32 \cdot \bar{l}g.$$

Alternativement, pour présenter un meilleur rapport poids/raideur, la tige 18 peut être un cylindre creux.

Le mécanisme de transmission 19 transmet également le couple Km à la demi-barre 3 par réaction. On peut donc écrire les relations K = Ωm/Ωc = Tc/Tm. Ainsi, on a Tc/Ωc = K².Tm/Ωm, soit :

$$Kc = K^2.Km \qquad (1)$$

La relation (1) montre que pour une raideur Km de la tige de torsion 18 constante et un rapport de transmission K du mécanisme de transmission variable, la raideur Kc du mécanisme de couplage 5 est variable.

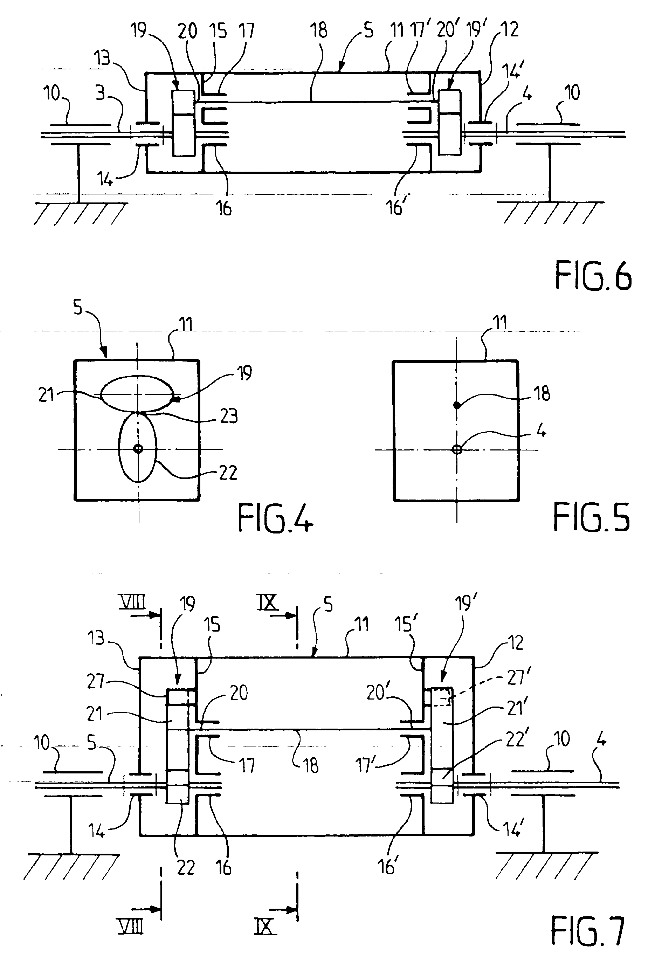

Le mécanisme de transmission 19 comprend un premier pignon 21 et un deuxième pignon 22. Les pignons 21 et 22 sont en forme d'ellipse et de mêmes dimensions. Le pignon 21 est solidaire en rotation avec la portion d'extrémité 20 de la tige 18, qui passe par le centre du pignon 21. Le pignon 22 est solidaire en rotation avec la demi-barre 3, qui passe par le centre du pignon 22. Les pignons 21 et 22 coopèrent au niveau d'un point de contact 23. La figure 4 représente le mécanisme de couplage dans un état neutre, c'est-à-dire dans un état dans lequel les angles Ωm et Ωc sont nuls. Dans cet état, le point de contact est situé au niveau d'un petit axe du pignon 21 et d'un grand axe du pignon 22. Si, à partir de l'état neutre, le pignon 22 tourne selon un angle Ωc, il en résulte une rotation du pignon 21 selon un angle Ωm non proportionnel à Ωc. Le point de contact 23 se déplace le long de la périphérie des pignons 21 et 22.

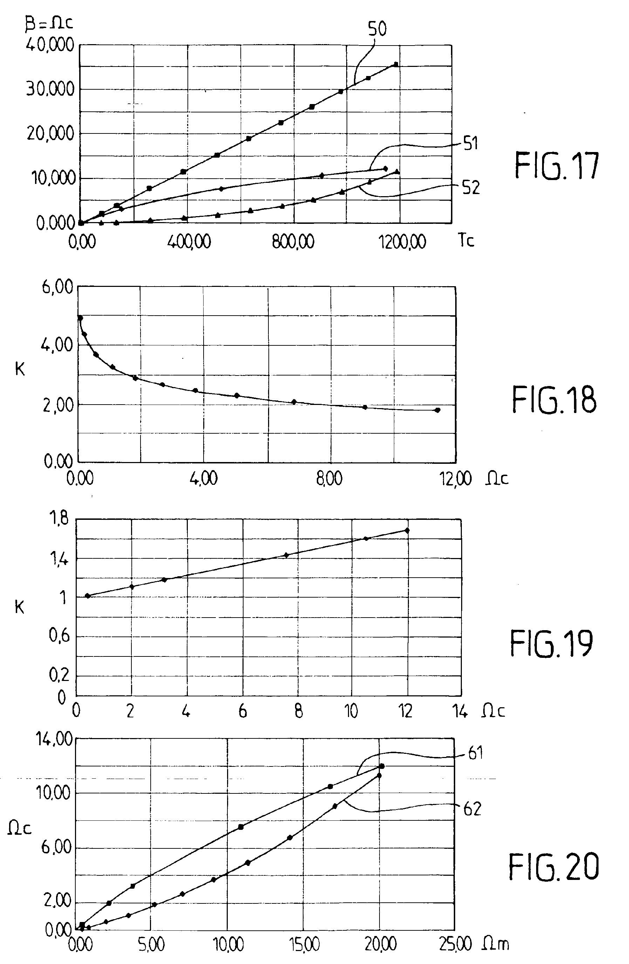

La figure 18 représente la relation entre K et Ωc. Pour des petits angles Ωc et Ωm, on peut écrire : $R_{21}$.Ωm = $R_{22}$.Ωc. Donc : K = Ωm/Ωc = $R_{22}$/$R_{21}$. Dans cette relation, $R_{21}$ est le rayon du pignon 21, entre son centre et le point de contact 23, et $R_{22}$ est le rayon du pignon 22, entre son centre et le point de contact 23. Comme on le voit sur la figure 4, quand Ωc évolue dans la plage allant de -45° à 45°, $R_{22}$ est plus grand que $R_{21}$. K est donc supérieur à 1, comme on le voit sur la figure 18. $R_{22}$ diminue avec Ωc, alors que $R_{21}$ augmente avec Ωc. K est donc une fonction décroissante en fonction de Ωc, comme on le voit sur la figure 18.

Au cours du fonctionnement du dispositif anti-roulis 2, l'angle β, et donc l'angle Ωc, évoluent dans une plage limitée, par exemple de -20° à 20°. Ainsi, les pignons 21 et 22 ne font jamais un tour complet sur eux-même et le point 23 ne se déplace pas sur toute la périphérie des pignons 21 et 22. Ainsi, selon une variante, pour réduire le poids et l'encombrement du mécanisme de couplage 5, les pignons 21 et 22 pourraient être en forme de portion d'ellipse.

La figure 6 représente un mécanisme de couplage 5 selon un deuxième mode de réalisation de l'invention. Les éléments identiques ou similaires à des éléments du premier mode de réalisation portent les mêmes références. La partie du mécanisme de couplage 5 représentée à gauche de la figure 6 est identique à la partie représentée à gauche de la figure 3.

La partie du mécanisme de couplage 5 représentée à droite de la figure 6 est symétrique à la partie représentée à gauche de la figure 6. En d'autres termes, la demi-barre 4 est liée en rotation au boîtier 11 par un palier 14' et un palier 16' ménagé dans une paroi interne 15'. La portion d'extrémité 20' de la tige 18, opposée à la portion 20, est supportée par un palier 17'. Un mécanisme de transmission 19' à rapport variable accouple la demi-barre 4 et la portion 20'.

Le fonctionnement du mécanisme de couplage 5 de la figure 6 est similaire à celui du mécanisme de couplage de la figure 3. Cependant dans ce cas, les couples Tm et Tc résultant de la torsion de la tige 18 sont répartis entre les mécanismes de transmission 19 et 19'. Ainsi, les efforts que doivent supporter les mécanismes 19 et 19', découlant des couples Tm et Tc, sont répartis entre deux mécanismes. Chaque mécanisme de transmission 19 ou 19' peut donc être conçu pour supporter un effort réduit, par rapport au mécanisme 19 de la figure 3.

Un mécanisme de couplage selon un troisième mode de réalisation de l'invention est représenté sur les figures 7 à 9. Les éléments identiques ou similaires à des éléments du deuxième mode de réalisation portent les mêmes références.

Le pignon 22, de même que le pignon correspondant 22' du mécanisme de transmission 19', présente, sur une portion de sa périphérie s'étendant sur 90°, une portion 99 en forme de portion de spirale, dont le rayon en un point considéré augmente avec l'angle, ouvert vers le haut de la figure 8, défini par le point considéré, le centre du pignon et la ligne verticale passant par le centre du pignon. Le reste de la périphérie du pignon 22 peut être de forme quelconque, par exemple en forme de portion de cercle ou d'ellipse. Le pignon 21, de même que le pignon correspondant 21' du mécanisme de transmission 19', présente, sur une portion de sa périphérie s'étendant sur 90°, une portion 24 en forme de portion de spirale complémentaire à la portion 99, dont le rayon en un point considéré diminue avec l'angle, ouverte vers le bas de la figure 8, défini par le point considéré, le centre du pignon et la ligne verticale passant par le centre du pignon. Plus précisément, la périphérie du pignon 21 présente une portion en spirale 24 de centre 25, et une portion en L 26, dont le coin correspond au centre 25. Les portions de la périphérie du pignon 21 entre les portions 24 et 26 peuvent être de forme quelconque.

La figure 8 représente le mécanisme de couplage 5 dans un état neutre. Dans cet état, une nervure 27, faisant saillie de la paroi 15 du côté tourné vers la paroi 13, est en butée contre la portion en L 26 du pignon 21. Ainsi, la rotation du pignon 21 dans le sens horaire, vu comme sur la figure 8, est bloquée. Une nervure 27' sur la paroi 15' est agencée de manière correspondante pour bloquer la rotation du pignon 21' dans le sens anti-horaire, vu comme sur la figure 8. Ainsi, lors d'une rotation relative des deux demi-barres 3 et 4 à partir de l'état neutre, seuls les pignons 21 et 22 ou 21' et 22' vont tourner, en fonction du sens de la rotation.

Si, à partir de l'état neutre, le pignon 22 tourne selon un angle $\Omega c$, il en résulte une rotation du pignon 21 selon un angle $\Omega m$ non proportionnel à $\Omega c$.

La figure 19 représente la relation entre K et $\Omega c$. Comme ci-dessus, on peut écrire $K = \Omega m/\Omega c = R_{22}/R_{21}$ Comme on le voit sur la figure 8, quand $\Omega c$ évolue dans la plage allant de 0° à par exemple 45°, $R_{22}$ est plus grand que $R_{21}$. K est donc supérieur à 1, comme on le voit sur la figure 19. $R_{22}$ augmente avec $\Omega c$, alors que $R_{21}$ diminue avec $\Omega c$. K est donc une fonction croissante en fonction de $\Omega c$, comme on le voit sur la figure 19. Comme on le voit, les pignons 21 et 22 coopérant au niveau de portions 99 et 24 en forme de spirale permettent de réaliser une variation linéaire de K en fonction de $\Omega c$.

Les figures 10 à 13 représentent un mécanisme de couplage 5 selon un quatrième mode de réalisation de l'invention. Les éléments identiques ou similaires à des éléments du premier mode de réalisation portent les mêmes références.

Le mécanisme de couplage 5 comprend une première paroi interne 31, adjacente à la paroi 13, et une deuxième paroi interne 30, adjacente à la paroi 31. La paroi interne 31 présente un palier 38, en regard du palier 14, et un palier 36, désaxé par rapport à l'axe A, situé en regard d'un palier 37 porté par la paroi 13. La demi-barre 3 pénètre partiellement dans le boîtier 11 et est portée par les paliers 14 et 38, sans passer au delà de la paroi 31. Une tige de transmission 32 s'étend parallèlement à la demi-barre 3, et est portée par les paliers 37 et 36. La tige de transmission 32 s'étend au delà de la paroi 31. Un mécanisme de transmission 33 à rapport constant accouple la demi-barre 3 à la tige 32. Le mécanisme 33 comprend un pignon circulaire 42 solidaire de la demi-barre 3 et un pignon circulaire 43 solidaire de la tige 32 et coopérant avec le pignon 42. Le mécanisme de transmission 33 pourrait être réalisé différemment, par exemple avec un engrenage planétaire.

Du côté opposé à la paroi 13, la paroi 31 présente un palier 39, situé sur l'axe A. La paroi 30 présente un palier 40, en regard du palier 39, et un palier 35 en regard du palier 36. La tige 32 se prolonge jusqu'au palier 35. Les paliers 39 et 40 portent une tige de transmission 41. Un mécanisme de transmission 34 à rapport variable accouple la tige 32 à la tige 41. Dans l'exemple représenté, le mécanisme de transmission 34 est similaire au mécanisme de transmission 19 de la figure 3, et comprend deux pignons 44 et 45 en forme d'ellipse.

La demi-barre 4 est fixée à la paroi 12 du boîtier 11, et pénètre partiellement dans le boîtier 11. La tige de torsion 18 s'étend coaxialement avec l'axe A. La tige 18 est fixée par une extrémité à la demi-barre 4 et par l'autre extrémité à la tige de transmission 41. Ainsi, une rotation relative des demi-barres 3 et 4 entraîne une torsion de la tige 18.

L'avantage de ce quatrième mode de réalisation est que l'unique tige de torsion 18 est alignée avec l'axe A. Ainsi, hormis au niveau des mécanismes de transmission 33 et 34, le boîtier 11 peut être de dimension réduite.

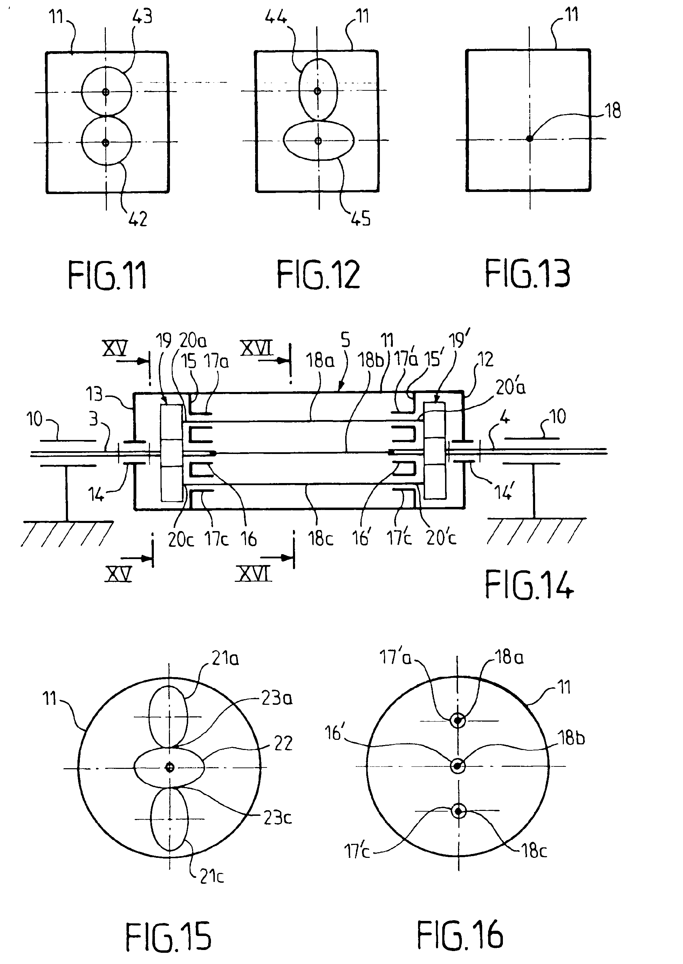

Les figures 14 à 16 représentent un mécanisme de couplage 5 selon un cinquième mode de réalisation de l'invention. Les éléments identiques ou similaires à des éléments du deuxième mode de réalisation portent les mêmes références.

Dans ce mode de réalisation, le boîtier 11 présente une section circulaire centrée autour de l'axe A. Bien entendu, le boîtier 11 pourrait présenter une autre section, par exemple rectangulaire comme dans les autres modes de réalisation décrits ci-dessus. Le boîtier dans ces autres modes de réalisation pourrait aussi être de section non rectangulaire, par exemple de section circulaire.

Le mécanisme de couplage 5 comprend trois tiges de torsion. La tige de torsion 18b s'étend coaxialement avec l'axe A, et est fixée par ses extrémités aux demi-barres 3 et 4 au niveau des paliers 16 et 16'. Les tiges de torsion 18a et 18c s'étendent parallèlement à la tige 18b, entre les paliers 17a et 17a', respectivement 17b et 17b', des parois internes 15 et 15'. Les tiges 18a et 18c sont diamétralement opposées.

Le mécanisme de transmission 19 à rapport variable accouple d'une part la demi-barre 3 à la tige de torsion 18a, et d'autre part la demi-barre 3 à la tige de torsion 18b. A cet effet, le mécanisme de transmission 19 comprend un pignon en forme d'ellipse 22 solidaire de la demi-barre 3, un pignon en forme d'ellipse 21a solidaire d'une portion d'extrémité 20a de la tige de torsion 18a et un pignon en forme d'ellipse 21c solidaire d'une portion d'extrémité 20c de la tige de torsion 18c. Les pignons 22 et 21a coopèrent au niveau d'un point de contact 23a. Les pignons 22 et 21c coopèrent au niveau d'un point de contact 23c. Le mécanisme de transmission 19' est similaire au mécanisme 19.

L'avantage du mécanisme de couplage 5 selon le cinquième mode de réalisation est que les efforts que doivent supporter les mécanismes de transmission 19 et 19', résultant des couples Tc et Tm, sont répartis entre les points de contacts 23a, 23c du mécanisme 19 et les points correspondant du mécanisme 19'. Ainsi, les différents pignons peuvent être conçus de manière à ne devoir supporter qu'un effort réduit. Pour réduire encore l'effort maximal à supporter, le mécanisme 5 pourrait comprendre plus de trois tiges de torsion, la seule limite provenant de l'encombrement du mécanisme de couplage 5. De plus, dans ce mode de réalisation, la répartition du couple Tm entre les différentes tiges de torsion 18a, 18b et 18c évolue en fonction de l'angle $\Omega c$.

La figure 17 est un graphe représentant la relation entre l'angle $\Omega c$, en degré, et le couple Tc, en Nm, pour trois dispositifs anti-roulis. La courbe 50 se rapporte à un dispositif anti-roulis passif selon l'art antérieur, à raideur constante. La courbe 51 se rapporte à un dispositif anti-roulis équipé du mécanisme de couplage de la figure 7. La courbe 52 se rapporte à un dispositif anti-roulis équipé du mécanisme de couplage de la figure 3. Des courbes similaires ou identiques aux courbes 51 et 52 seraient obtenues avec les mécanismes de couplage des figures 6 ou 10.

Pour un point donné sur une des courbes, la pente de la droite qui relie ce point donné à l'origine du graphe est l'inverse de la raideur, soit 1/Kc. Comme on le voit sur la figure, la raideur est constante en fonction de $\Omega c$ pour la courbe 50. Pour la courbe 51, la raideur Kc augmente en fonction de $\Omega c$ donc 1/Kc décroît en fonction de $\Omega c$, et pour la courbe 52, la raideur Kc diminue en fonction de $\Omega c$, donc 1/Kc croît en fonction de $\Omega c$. Ces comportements illustrés correspondent à ceux qu'on pouvait déduire de la formule (1) et de la variation de K en fonction de $\Omega c$ pour les mécanismes de couplage des figures 3 et 7.

La figure 20 est un graphe représentant la relation l'angle $\Omega m$ et l'angle $\Omega c$, en degré, pour les mécanismes de couplage des figures 3 et 7. Pour chaque courbe, la pente de la droite reliant l'origine du repère à un point de la courbe représente l'inverse du rapport de transmission, soit 1/K = $\Omega c/\Omega m$. La courbe 61 se rapporte au mécanisme de la figure 7 et la courbe 62 se rapporte au mécanisme de la figure 3.

Un mécanisme de couplage selon l'invention pourrait présenter des différences par rapport aux mécanismes de couplage décrits ci-dessus.

Dans les mécanismes de couplage décrits présentant une raideur décroissante en fonction de $\Omega c$, on utilise des pignons en forme d'ellipse. Des pignons en forme d'ellipse peuvent aussi être utilisés pour réaliser un mécanisme de couplage à raideur croissante en fonction de $\Omega c$, par exemple en disposant les pignons de sorte que dans l'état neutre, ils soient tournés de 90° par rapport à la position représentée sur la figure 4. De même, un mécanisme de couplage à raideur décroissante pourrait être réalisé avec des pignons présentant une portion en forme de spirale.

Le mécanisme de couplage de la figure 6 pourrait présenter des nervures similaires aux nervures 27 et 27' du mécanisme de couplage de la figure 7, et coopérant avec les pignons des mécanismes 19 et 19' dans l'état neutre. Dans ce cas, les pignons du mécanisme de couplage de la figure 6 peuvent être par exemple en forme de quart d'ellipse, car ils ne doivent tourner que dans un sens à partir de l'état neutre.

Les mécanismes de couplages décrits présentent en guise d'arbre d'entrée une portion d'extrémité de la demi-barre 3 et éventuellement de la demi-barre 4. Alternativement, le (ou les) arbre d'entrée peut être un arbre faisant saille hors du boîtier 11, auquel on peut accoupler une demi-barre. Dans cette variante, il est possible de fabriquer le mécanisme de couplage indépendamment des deux demi-barres, puis d'assembler le mécanisme de couplage avec deux demi-barres pour former un dispositif anti-roulis.

L'invention ne se limite pas aux mécanismes de transmission à rapport variable conçu à base de pignon en forme d'ellipse ou de spirale. Le (ou les) mécanisme de transmission à rapport variable peut être conçu pour que la variation du rapport de transmission en fonction de l'angle $\Omega c$ corresponde à une variation de la raideur voulue pour correspondre à un comportement en roulis du véhicule voulu, par exemple choisi pour optimiser un compromis entre confort et maniabilité du véhicule. Des simulations effectuées ont permis de constater qu'un mécanisme de couplage selon l'invention, comprenant des pignons en forme d'ellipse ou de spirale, permet d'améliorer le comportement en roulis du véhicule par rapport à un dispositif anti-roulis passif, en présentant une qualité de confort comparable à celle pouvant être obtenue avec un dispositif anti-roulis actif.

Dans une variante du mécanisme de la figure 3, la tige de torsion 18 n'est pas fixée directement à la paroi 12, mais par l'intermédiaire d'un embrayage ou d'un système de crabotage fixé à la paroi 12 à l'intérieur du boîtier 11 et permettant de réaliser un découplage total entre les demi-barres 3 et 4. Cette variante n'est cependant pas préférée car la continuité mécanique du mécanisme de couplage, c'est-à-dire la présence constante d'un couplage entre les demi-barres 3 et 4, n'est pas assurée.

Ci-dessus, on a fait l'hypothèse que les demi-barres 3 et 4 ne travaillent sensiblement pas en torsion. On va maintenant donner un exemple de calcul de dimensionnement, dans le cas du mécanisme de la figure 3. On veut que la raideur Kb, correspondant à la raideur des demi-barres 3 et 4 réunies, soit nettement supérieure (») à la raideur Kc du dispositif anti-roulis 2 : Kb » Kc. Avec la formule (1), on a donc Kb » K$^2$.Km, qui doit être vérifiée même pour la valeur maximale $K_{max}$ que peut prendre K. Pour des demi-barres 3 et 4 et une tige 18 cylindrique circulaire, on a donc la relation :

$$G.\,\pi.d_b{}^4/32.\lg_b >> K_{max}{}^2.G.\pi.d_{18}{}^4/32.\lg_{18} \qquad (2)$$

Dans la relation (2), $d_b$ et $\lg_b$ représentent respectivement le diamètre et la longueur totale des demi-barres 3 et 4 ; $d_{18}$ et $\lg_{18}$ représentent respectivement le diamètre et la longueur de la tige de torsion 18. Si les demi-barres 3 et 4 et la tige de torsion 18 sont réalisés dans le même matériau, cela donne comme contrainte de dimensionnement la relation : $d_b{}^4/\lg_b » K_{max}{}^2.d_{18}{}^4/\lg_{18}$. Le boîtier 11 est également dimensionné pour qu'il ne se déforme pas sensiblement.

Dans tous les modes de réalisation ci-dessus, d'autres formes de ressort de torsion peuvent être utilisés, par exemple des ressorts à lame en spirale.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

**Revendications**

1. Mécanisme de couplage (5) pour barre antiroulis (2) de véhicule (1), destiné à réaliser un couplage entre une première et une deuxième demi-barre (3, 4) en présentant une raideur de torsion, comprenant un corps (11), **caractérisé par le fait qu'**il comprend au moins un mécanisme de transmission (19) incluant un arbre d'entrée monté à rotation par rapport audit corps et destiné à être lié à ladite première demi-barre (3), un ressort de torsion (18) présentant une première portion (20) montée à rotation par rapport audit corps, des moyens de transmission (21, 22) accouplant l'arbre d'entrée à ladite première portion du ressort de torsion de manière à transmettre une rotation dudit arbre d'entrée à ladite première portion, lesdits moyens de transmission présentant un rapport de transmission variable en fonction de l'angle de rotation dudit arbre d'entrée par rapport audit corps, ledit mécanisme de couplage comprenant des moyens de liaison (12, 19') destinés à lier une deuxième portion du ressort de torsion à ladite deuxième demi-barre (4) de manière qu'une rotation relative desdites première et deuxième demi-barres entraîne une torsion dudit ressort de torsion.

2. Mécanisme de couplage selon la revendication 1, **caractérisé par le fait que** le rapport dudit angle de rotation de ladite première portion du ressort de torsion par rapport audit corps sur l'angle de rotation de l'arbre d'entrée par rapport audit corps est une fonction continue décroissante dudit angle de rotation de l'arbre d'entrée par rapport audit corps.

3. Mécanisme de couplage selon la revendication 1, **caractérisé par le fait que** le rapport dudit angle de rotation de ladite première portion du ressort de torsion par rapport audit corps sur l'angle de rotation de l'arbre d'entrée par rapport audit corps est une fonction continue croissante dudit angle de rotation de l'arbre d'entrée par rapport audit corps.

4. Mécanisme de couplage selon l'une des revendications 1 à 3, **caractérisé par le fait que** lesdits moyens de transmission comprennent un premier et un deuxième pignon en ellipses ou portion d'ellipse de formes correspondantes pour coopérer l'un avec l'autre lors d'une rotation autour de leurs centres respectifs, ledit premier pignon (21) étant couplé à ladite première portion (20) du ressort de torsion de manière que la rotation dudit premier pignon est proportionnelle audit angle de rotation de ladite première portion par rapport audit corps, ledit deuxième pignon (22) étant couplé audit arbre d'entrée (3) de manière que la rotation dudit deuxième pignon est proportionnelle audit angle de rotation de l'arbre d'entrée par rapport audit corps.

5. Mécanisme de couplage selon la revendication 2 et la revendication 4, **caractérisé par le fait que** dans un état neutre dudit mécanisme de couplage correspondant à une valeur nulle desdits angles de rotation par rapport audit corps, lesdits premier et deuxième pignons sont agencés de manière à coopérer au niveau d'un petit axe dudit premier pignon et d'un grand axe dudit deuxième pignon.

6. Mécanisme de couplage selon l'une des revendications 1 à 3, **caractérisé par le fait que** lesdits moyens de transmission comprennent un premier et un deuxième pignon présentant chacun une portion en spirale (24, 99) de formes complémentaires pour coopérer l'un avec l'autre lors d'une rotation autour de leurs centres respectifs, ledit premier pignon (21) étant couplé à ladite première portion du ressort de torsion de manière que la rotation dudit premier pignon est proportionnelle audit angle de rotation de ladite première portion par rapport audit corps, ledit deuxième pignon (22) étant couplé audit arbre d'entrée de manière que la rotation dudit deuxième pignon est proportionnelle audit angle de rotation de l'arbre d'entrée par rapport audit corps.

7. Mécanisme de couplage selon la revendication 3 et la revendication 6, **caractérisé par le fait que** dans un état neutre dudit mécanisme de couplage correspondant à une valeur nulle dudit angle de torsion et dudit angle de rotation, lesdits premier et deuxième pignons sont agencés de manière à coopérer au niveau d'un rayon dudit premier pignon et d'un rayon dudit deuxième pignon de longueur supérieure à la longueur dudit rayon du premier pignon.

8. Mécanisme de couplage selon l'une des revendications 1 à 7, **caractérisé par le fait que** lesdits moyens de liaison comprennent un mécanisme de transmission supplémentaire (19') incluant un arbre d'entrée supplémentaire monté à rotation par rapport audit corps et destiné à être lié à ladite deuxième demi-barre (4), lesdites première et deuxième portions dudit ressort de torsion montées à rotation par rapport audit corps, des moyens de transmission supplémentaires accouplant l'arbre d'entrée supplémentaire à ladite deuxième portion (20') du ressort de torsion (18) de manière à transmettre une rotation dudit arbre d'entrée supplémentaire à ladite deuxième portion, lesdits moyens de transmission supplémentaires présentant un rapport de transmission variable en fonction de l'angle de rotation dudit arbre d'entrée supplémentaire par rapport audit corps.

9. Mécanisme de couplage selon la revendication 8, **caractérisé par le fait que** ledit mécanisme de transmission comprend une butée (27) agencée de manière que lors de ladite rotation relative desdites demi-barres dans un premier sens à partir d'un état neutre dudit mécanisme de couplage, correspondant à une valeur nulle desdits angles de rotation par rapport audit corps, l'actionnement dudit mécanisme de transmission est bloqué par ladite butée, et ledit mécanisme de transmission supplémentaire comprend une butée (27') agencée de manière que lors de ladite rotation relative desdites demi-barres dans un second sens à partir dudit état neutre, l'actionnement dudit mécanisme de transmission supplémentaire est bloqué par ladite butée.

10. Mécanisme de couplage selon l'une des revendications 1 à 7, **caractérisé par le fait que** lesdits moyens de liaison comprennent une portion (12) dudit corps, ladite deuxième portion dudit ressort de torsion étant fixée en rotation à ladite portion du corps, ladite portion du corps étant destinée à être fixée en rotation à ladite deuxième demi-barre.

11. Mécanisme de couplage selon l'une des revendications 1 à 10, **caractérisé par le fait que** ledit ressort de torsion comprend une tige de torsion.

12. Mécanisme de couplage selon la revendication 11, **caractérisé par le fait que** ledit mécanisme de transmission inclut une deuxième tige de torsion (18c) présentant une première portion d'extrémité (20c) montée à rotation par rapport audit corps, lesdits moyens de transmission accouplant ledit arbre d'entrée à ladite première portion de la deuxième tige de torsion, lesdits moyens de liaison étant aptes à lier une deuxième portion (20c') de la deuxième tige de torsion à ladite deuxième demi-barre de manière qu'une rotation relative desdites première et deuxième demi-barres entraîne une torsion de ladite deuxième tige de torsion.

13. Mécanisme de couplage selon la revendication 11 ou la revendication 12, **caractérisé par le fait qu'**il comprend une autre tige de torsion (18b) présentant une première portion d'extrémité montée à rotation par rapport audit corps et couplée audit premier arbre d'entrée destiné à être lié à ladite première demi-barre de manière que l'angle de rotation de la première portion de ladite autre tige de torsion est proportionnel audit angle de rotation dudit premier arbre d'entrée par rapport audit corps, une deuxième portion de ladite autre tige de torsion étant couplée à un deuxième arbre d'entrée monté à rotation par rapport audit corps et destiné à être lié à ladite deuxième demi-barre de manière qu'une rotation relative desdites première et deuxième demi-barres entraîne une torsion de ladite autre tige de torsion.

14. Mécanisme de couplage la revendication 11, **caractérisé par le fait que** ladite tige de torsion (18) s'étend de manière coaxiale avec un axe longitudinal desdites demi-barres.

15. Mécanisme de couplage selon l'une des revendications 11 à 14, **caractérisé par le fait que** ladite ou chaque tige de torsion est un cylindre creux.

16. Mécanisme de couplage selon l'une des revendications 1 à 15, **caractérisé par le fait que** ledit corps comprend un boîtier (11), ledit ressort de torsion et ledit au moins un mécanisme de transmission étant agencés dans ledit boîtier.

17. Mécanisme de couplage selon l'une des revendications 1 à 16, **caractérisé par le fait que** lesdits moyens de liaison comprennent des moyens de découplage aptes à découpler ladite deuxième portion du ressort de torsion de ladite deuxième demi-barre.

18. Dispositif antiroulis (2) pour équiper un train de roues (8) d'un véhicule automobile (1) dans lequel chacune des roues dudit train de roues est couplée avec une mobilité verticale à une caisse (9) dudit véhicule, ledit dispositif anti-roulis comportant une barre de torsion en forme de U ayant une portion centrale destinée à être montée solidairement à ladite caisse et parallèlement à un axe dudit train de roues, et des premier et deuxième bras latéraux (6, 7) dont les extrémités libres sont destinées à être respectivement couplées à des supports desdites roues ; ladite barre de torsion étant composée d'une première démi-barre (3) et d'une deuxième demi-barre (4) reliées l'une à l'autre au niveau de ladite portion centrale au moyen d'un mécanisme de couplage (5) pour coupler lesdites première et deuxième demi-barres entre elles en présentant une raideur de torsion, **caractérisé en ce que** ledit mécanisme de couplage est un mécanisme selon l'une des revendications 1 à 17.

**Claims**

1. Coupling mechanism (5) for anti-roll bar (2) of a vehicle (1), intended to effect coupling between a first and a second half-bar (3, 4) while presenting a torsion stiffness, comprising a body (11), **characterised by** the fact that it comprises at least a transmission mechanism (19) including an input shaft mounted rotatably relative to the said body and intended to be connected to the said first half-bar (3), a torsion spring (18) presenting a first portion (20) mounted rotatably relative to the said body, transmission means (21, 22) coupling the input shaft to the said first portion of the torsion spring so as to transmit rotation of the said input shaft to the said first portion, the said transmission means having a transmission ratio variable as a function of the angle of rotation of the said input shaft relative to the said body, the said coupling mechanism comprising connecting means (12, 19') intended to connect a second portion of the torsion spring to the said second half-bar (4) in such a manner that relative rotation of the said first and second half-bars causes torsion of the said torsion spring.

2. Coupling mechanism as described in claim 1, **characterised by** the fact that the ratio of the said angle of rotation of the said first portion of the torsion spring relative to the said body to the angle of rotation of the input shaft relative to the said body is a continuous decreasing function of the said angle of rotation of the input shaft relative to the said body.

3. Coupling mechanism as described in claim 1, **characterised by** the fact that the ratio of the said angle of rotation of the said first portion of the torsion spring relative to the said body to the angle of rotation of the input shaft relative to the said body is a continuous increasing function of the said angle of rotation of the input shaft relative to the said body.

4. Coupling mechanism as described in one of claims 1 to 3, **characterised by** the fact that the said transmission means comprise a first and a second cog-wheel in the form of ellipses or portion of an ellipse of shapes corresponding to co-operate with each other on rotation about their respective centres, the said first cog-wheel 21 being coupled to the said first portion (20) of the torsion spring in such a manner that rotation of the said first cog-wheel is proportional to the said angle of rotation of the said first portion relative to the said body, the said second cog-wheel (22) being coupled to the said input shaft (3) so that the rotation of the said second cog-wheel is proportional to the said angle of rotation of the input shaft relative to the said body.

5. Coupling mechanism as described in claim 2 and claim 4, **characterised by** the fact that in a neutral state of the said coupling mechanism corresponding to a zero value of the said angles of rotation relative to the said body, the said first and second cog-wheels are so arranged as to co-operate at a small axis of the said first cog-wheel and a large axis of the said second cog-wheel.

6. Coupling mechanism as described in one of claims 1 to 3, **characterised by** the fact that the said transmission means comprise a first and a second cog-wheel each presenting a spiral portion (24, 99) of complementary shapes to co-operate with each other on rotation about their respective centres, the said first cog-wheel (21) being coupled to the said first portion of the torsion spring in such a manner that rotation of the said first cog-wheel is proportional to the said angle of rotation of the said first portion relative to the said body, the said second cog-wheel (22) being coupled to the said input shaft in such a manner that rotation of the said second cog-wheel is proportional to the said angle of rotation of the input shaft relative to the said body.

7. Coupling mechanism as described in claim 3 and claim 6, **characterised by** the fact that in a neutral state of the said coupling mechanism corresponding to a zero value of the said angle of torsion and of the said angle of rotation, the said first and second cog-wheels are so arranged as to co-operate at a radius of the said first cog-wheel and a radius of the said second cog-wheel of length greater than the length of the said radius of the first cog-wheel.

8. Coupling mechanism as described in one of claims 1 to 7, **characterised by** the fact that the said connection means comprise an additional transmission mechanism (19') including an additional input shaft mounted rotatably relative to the said body and intended to be connected to the said second half-bar (4), the said first and second portions of the said torsion spring mounted rotatably relative to the said body, additional transmission means coupling the additional input shaft to the said second portion (20') of the torsion spring (18) so as to transmit rotation of the said additional input shaft to the said second portion, the said additional transmission means having a transmission ratio variable as a function of the angle of rotation of the said additional input shaft relative to the said body.

9. Coupling mechanism as described in claim 8, **characterised by** the fact that the said transmission mechanism includes a stop (27) so arranged that on the said relative rotation of the said half-bars in a first direction from a neutral state of the said coupling mechanism, corresponding to a zero value of the said angles of rotation relative to the said body, actuation of the said transmission mechanism is prevented by the said stop, and the said additional transmission mechanism includes a stop (27') so arranged that on the said relative rotation of the said half-bars in a second direction from the said neutral state, actuation of the said additional transmission mechanism is prevented by the said stop.

10. Coupling mechanism as described in one of claims 1 to 7, **characterised by** the fact that the said connecting means include a portion (12) of the said body, the said second portion of the said torsion spring being fixed in rotation to the said portion of the body, the said portion of the body being intended to be fixed in rotation to the said second half-bar.

11. Coupling mechanism as described in one of claims 1 to 10, **characterised by** the fact that the said torsion spring comprises a torsion rod.

12. Coupling mechanism as described in claim 11, **characterised by** the fact that the said transmission mechanism includes a second torsion rod (18c) presenting a first end portion (20c) mounted rotatably relative to the said body, the said transmission means coupling the said input shaft to the said first portion of the second torsion rod, the said connection means being able to connect a second portion (20c') of the second torsion rod to the said second half-bar in such a manner that relative rotation of the said first and second half-bars causes torsion of the said second torsion rod.

13. Coupling mechanism as described in claim 11 or claim 12, **characterised by** the fact that it includes another torsion rod (18b) presenting a first end portion mounted rotatably relative to the said body and coupled to the said first input shaft intended to be connected to the said first half-bar in such a manner that the angle of rotation of the first portion of the said other torsion rod is proportional to the said angle of rotation of the said first input shaft relative to the said body, a second portion of the said other torsion rod being coupled to a second input shaft mounted rotatably relative to the said body and intended to be connected to the said second half-bar in such a manner that relative rotation of the said first and second half-bars causes torsion of the said other torsion rod.

14. Coupling mechanism as described in claim 11, **characterised by** the fact that the said torsion rod (18) extends co-axially with a longitudinal axis of the said half-bars.

15. Coupling mechanism as described in one of claims 11 to 14, **characterised by** the fact that the said or each torsion rod is a hollow cylinder.

16. Coupling mechanism as described in one of claims 1 to 15, **characterised by** the fact that the said body comprises a case (11), the said torsion spring and the said at least one transmission mechanism being arranged in the said case.

17. Coupling mechanism as described in one of claims 1 to 16, **characterised by** the fact that the said connecting means include uncoupling means able to uncouple the said second portion of the torsion spring from the said second half-bar.

18. Anti-roll device (2) to be fitted to a wheel-train (8) of a motor vehicle (1) in which each of the wheels of the said wheel-train is coupled with vertical mobility to a body (9) of the said vehicle, the said anti-roll device including a U-shaped torsion bar having a central portion intended to be mounted firmly on the said body and parallel with an axis of the said wheel-train, and first and second lateral arms (6, 7) the free ends of which are intended to be coupled respectively to supports of the said wheels; the said torsion bar being composed of a first half-bar (3) and a second half-bar (4) connected to each other at the said central portion by means of a coupling mechanism (5) to couple the said first and second half-bars to each other with a torsion stiffness, **characterised by** the fact that the said coupling mechanism is a mechanism as described in one of claims 1 to 17.

**EP 1 759 895 B1**

**Patentansprüche**

1. Kopplungsmechanismus (5) für einen Stabilisatorstab (2) eines Fahrzeugs (1), der dazu bestimmt ist, eine Kopplung zwischen einer ersten und einer zweiten Stabhälfte (3, 4) herzustellen, indem er eine Torsionssteifheit aufweist, umfassend einen Körper (11), **dadurch gekennzeichnet, dass** er umfasst: mindestens einen Übertragungsmechanismus (19), der eine Eingangswelle einschließt, die bezüglich des Körpers drehbar montiert ist und dazu bestimmt ist, mit der ersten Stabhälfte (3) verbunden zu werden, eine Torsionsfeder (18), die einen ersten Abschnitt (20) aufweist, der bezüglich des Körpers drehbar montiert ist, Übertragungsmittel (21, 22), die die Eingangswelle mit dem ersten Abschnitt der Torsionsfeder koppeln, so dass eine Drehung der Eingangswelle auf den ersten Teil übertragen wird, wobei die Übertragungsmittel ein Übertragungsverhältnis aufweisen, das in Abhängigkeit von dem Drehwinkel der Eingangswelle bezüglich des Körpers veränderlich ist, wobei der Kopplungsmechanismus Verbindungsmittel (12, 19') umfasst, die dazu bestimmt sind, einen zweiten Abschnitt der Torsionsfeder mit der zweiten Stabhälfte (4) zu verbinden, so dass eine Relativdrehung der ersten und der zweiten Stabhälfte eine Torsion der Torsionsfeder mit sich bringt.

2. Kopplungsmechanismus nach Anspruch 1, **dadurch gekennzeichnet, dass** das Verhältnis des Drehwinkels des ersten Abschnitts der Torsionsfeder bezüglich des Körpers zu dem Drehwinkel der Eingangswelle bezüglich des Körpers eine stetige fallende Funktion des Drehwinkels der Eingangswelle bezüglich des Körpers ist.

3. Kopplungsmechanismus nach Anspruch 1, **dadurch gekennzeichnet, dass** das Verhältnis des Drehwinkels des ersten Abschnitts der Torsionsfeder bezüglich des Körpers zum Drehwinkel der Eingangswelle bezüglich des Körpers eine stetige steigende Funktion des Drehwinkels der Eingangswelle bezüglich des Körpers ist.

4. Kopplungsmechanismus nach einem der Ansprüche 1 bis 3, **dadurch gekennzeichnet, dass** die Übertragungsmittel ein erstes und ein zweites Zahnrad in Form von Ellipsen oder eines Ellipsenabschnitts von entsprechenden Formen umfassen, um miteinander bei einer Drehung um ihre jeweiligen Mittelpunkte zusammenzuwirken, wobei das erste Zahnrad (21) mit dem ersten Abschnitt (20) der Torsionsfeder gekoppelt ist, so dass die Drehung des ersten Zahnrads zu dem Drehwinkel des ersten Abschnitts bezüglich des Körpers proportional ist, wobei das zweite Zahnrad (22) mit der Eingangswelle (3) gekoppelt ist, so dass die Drehung des zweiten Zahnrads zu dem Drehwinkel der Eingangswelle bezüglich des Körpers proportional ist.

5. Kopplungsmechanismus nach Anspruch 2 und Anspruch 4, **dadurch gekennzeichnet, dass** in einem neutralen Zustand des Kopplungsmechanismus, der einem Wert null der Drehwinkel bezüglich des Körpers entspricht, das erste und das zweite Zahnrad so angeordnet sind, dass sie auf Höhe einer kleinen Achse des ersten Zahnrads und einer großen Achse des zweiten Zahnrads zusammenwirken.

6. Kopplungsmechanismus nach einem der Ansprüche 1 bis 3, **dadurch gekennzeichnet, dass** die Übertragungsmittel ein erstes und ein zweites Zahnrad umfassen, die jeweils einen spiralförmigen Abschnitt (24, 99) von ergänzenden Formen aufweisen, um bei einer Drehung um ihre jeweiligen Mittelpunkte miteinander zusammenzuwirken, wobei das erste Zahnrad (21) mit dem ersten Abschnitt der Torsionsfeder gekoppelt ist, so dass die Drehung des ersten Zahnrads zu dem Drehwinkel des ersten Abschnitts bezüglich des Körpers proportional ist, wobei das zweite Zahnrad (22) mit der Eingangswelle gekoppelt ist, so dass die Drehung des zweiten Zahnrads zu dem Drehwinkel der Eingangswelle bezüglich des Körpers proportional ist.

7. Kopplungsmechanismus nach Anspruch 3 und Anspruch 6, **dadurch gekennzeichnet, dass** in einem neutralen Zustand des Kopplungsmechanismus, der einem Wert null des Torsionswinkels und des Drehwinkels entspricht, das erste und das zweite Zahnrad so angeordnet sind, dass sie auf Höhe eines Radius des ersten Zahnrads und eines Radius des zweiten Zahnrads zusammenwirken, dessen Länge größer als die Länge des Radius des ersten Zahnrads ist.

8. Kopplungsmechanismus nach einem der Ansprüche 1 bis 7, **dadurch gekennzeichnet, dass** die Verbindungsmittel umfassen: einen zusätzlichen Übertragungsmechanismus (19'), der eine zusätzliche Eingangswelle einschließt, die bezüglich des Körpers drehbar montiert ist und dazu bestimmt ist, mit der zweiten Stabhälfte (4) verbunden zu werden, den ersten und den zweiten Abschnitt der Torsionsfeder, die bezüglich des Körpers drehbar montiert sind, zusätzliche Übertragungsmittel, die die zusätzliche Eingangswelle mit dem zweiten Abschnitt (20') der Torsionsfeder (18) verbinden, so dass eine Drehung der zusätzlichen Eingangswelle auf den zweiten Abschnitt übertragen wird, wobei die zusätzlichen Übertragungsmittel ein Übertragungsverhältnis aufweisen, das in Abhängigkeit von dem Drehwinkel der zusätzlichen Eingangswelle bezüglich des Körpers veränderlich ist.

9. Kopplungsmechanismus nach Anspruch 8, **dadurch gekennzeichnet, dass** der Übertragungsmechanismus einen Anschlag (27) umfasst, der so angeordnet ist, dass bei der Relativdrehung der Stabhälften in einem ersten Sinn von einem neutralen Zustand des Kopplungsmechanismus aus, der einem Wert null der Drehwinkel bezüglich des Körpers entspricht, die Betätigung des Übertragungsmechanismus durch den Anschlag blockiert ist, und der zusätzliche Übertragungsmechanismus einen Anschlag (27') umfasst, der so angeordnet ist, dass bei der Relativdrehung der Stabhälften in einem zweiten Sinn aus dem neutralen Zustand heraus die Betätigung des zusätzlichen Übertragungsmechanismus durch den Anschlag blockiert ist.

10. Kopplungsmechanismus nach einem der Ansprüche 1 bis 7, **dadurch gekennzeichnet, dass** die Verbindungsmittel einen Abschnitt (12) des Körpers umfassen, wobei der zweite Abschnitt der Torsionsfeder an diesem Abschnitt des Körpers bezüglich Drehung befestigt ist, wobei der Abschnitt des Körpers dazu bestimmt ist, an der zweiten Stabhälfte bezüglich Drehung befestigt zu werden.

11. Kopplungsmechanismus nach einem der Ansprüche 1 bis 10, **dadurch gekennzeichnet, dass** die Torsionsfeder eine Torsionsstange umfasst.

12. Kopplungsmechanismus nach Anspruch 11, **dadurch gekennzeichnet, dass** der Übertragungsmechanismus eine zweite Torsionsstange (18c) einschließt, die einen ersten Endabschnitt (20c) aufweist, der bezüglich des Körpers drehbar montiert ist, wobei die Übertragungsmittel die Eingangswelle mit dem ersten Abschnitt der zweiten Torsionsstange koppeln, wobei die Verbindungsmittel einen zweiten Abschnitt (20c') der zweiten Torsionsstange mit der zweiten Stabhälfte verbinden können, so dass eine Relativdrehung der ersten und der zweiten Stabhälfte eine Torsion der zweiten Torsionsstange mit sich bringt.

13. Kopplungsmechanismus nach Anspruch 11 oder Anspruch 12, **dadurch gekennzeichnet, dass** er eine andere Torsionsstange (18b) umfasst, die einen ersten Endabschnitt aufweist, der bezüglich des Körpers drehbar montiert ist und mit der ersten Eingangswelle gekoppelt ist, die dazu bestimmt ist, mit der ersten Stabhälfte verbunden zu werden, so dass der Drehwinkel des ersten Abschnitts der anderen Torsionsstange zu dem Drehwinkel der ersten Eingangswelle bezüglich des Körpers proportional ist, wobei ein zweiter Abschnitt der anderen Torsionsstange mit einer zweiten Eingangswelle gekoppelt ist, die bezüglich des Körpers drehbar montiert ist und dazu bestimmt ist, mit der zweiten Stabhälfte verbunden zu werden, so dass eine Relativdrehung der ersten und der zweiten Stabhälfte eine Torsion der anderen Torsionsstange mit sich bringt.

14. Kopplungsmechanismus nach Anspruch 11, **dadurch gekennzeichnet, dass** die Torsionsstange (18) sich koaxial zu einer Längsachse der Stabhälften erstreckt.

15. Kopplungsmechanismus nach einem der Ansprüche 11 bis 14, **dadurch gekennzeichnet, dass** die oder jede Torsionsstange ein Hohlzylinder ist.

16. Kopplungsmechanismus nach einem der Ansprüche 1 bis 15, **dadurch gekennzeichnet, dass** der Körper ein Gehäuse (11) umfasst, wobei die Torsionsfeder und der mindestens eine Übertragungsmechanismus in dem Gehäuse angeordnet sind.

17. Kopplungsmechanismus nach einem der Ansprüche 1 bis 16, **dadurch gekennzeichnet, dass** die Verbindungsmittel Abkopplungsmittel umfassen, die den zweiten Abschnitt der Torsionsfeder von der zweiten Stabhälfte abkoppeln können.

18. Stabilisatorvorrichtung (2) für einen Radsatz (8) eines Kraftfahrzeugs (1), bei dem jedes der Räder des Radsatzes mit einer vertikalen Beweglichkeit mit einem Aufbau (9) des Fahrzeugs gekoppelt ist, wobei die Stabilisatorvorrichtung einen U-förmigen Torsionsstab umfasst, der einen Mittelteil, der dazu bestimmt ist an dem Aufbau fest und parallele zu einer Achse des Radsatzes montiert zu werden, und einen ersten und einen zweiten seitlichen Arm (6, 7) aufweist, deren freie Enden dazu bestimmt sind, jeweilig mit Haltern der Räder gekoppelt zu werden; wobei der Torsionsstab aus einer ersten Stabhälfte (3) und aus einer zweiten Stabhälfte (4) zusammengesetzt ist, die auf Höhe des Mittelteils mit Hilfe eines Kopplungsmechanismus (5) miteinander verbunden sind, um die erste und die zweite Stabhälfte mit einer Torsionssteifheit miteinander zu verbinden, **dadurch gekennzeichnet, dass** der Kopplungsmechanismus ein Mechanismus nach einem der Ansprüche 1 bis 17 ist.

EP 1 759 895 B1

FIG.1

FIG.2

15

EP 1 759 895 B1

FIG.6

FIG.4

FIG.5

FIG.7

16

FIG.8

FIG.9

FIG.3

FIG.10

EP 1 759 895 B1

FIG.11    FIG.12    FIG.13

FIG.14

FIG.15    FIG.16

18

FIG.17

FIG.18

FIG.19

FIG.20

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6425585 B
- US 6550788 B